# EUROPEAN PATENT APPLICATION

(11) **EP 2 677 262 A1**
(43) Date of publication of application: **25.12.2013**
(21) Application number: 12305718.4
(22) Date of filing: 22.06.2012
(51) Int. Cl.: F28D 20/00, E04H 3/12

(54) **Structural element for transitory storage and deferred use of thermal energy, related structure and methods**

(71) Applicant: Soletanche Freyssinet, 92500 Rueil Malmaison (FR)
(72) Inventor: Stubler, Jérôme, 75016 Paris (FR); Freitag, Nicolas, 91400 Orsay (FR)
(74) Representative: Cabinet Plasseraud

(57) **Abstract**

Structural element (3;13) for a civil engineering structure, which comprises a first part (P1) and a second part (P2) and is provided with: a first set (1;11) of at least one heat exchanger extending between the first part of the structural element and the second part of the structural element so as to transfer thermal energy from the first part of the structural element acting as a heat or coolness source (S) to the second part of the structural element where it is transitorily stored.

## Description

The present invention relates to thermal energy management with respect to a civil engineering structure.

A civil engineering structure is conventionally provided with thermal energy by specific means, which are added to the structure precisely for that purpose. Those means include heaters when the temperature inside the structure must be increased and/or air-conditioners when the temperature inside the structure must be decreased.

More recently, it has been proposed to take benefit from the thermal energy available in an element external to the structure and to transfer it inside the structure. As an example, geothermal technique captures calories naturally stored in the soil at low depth as a result of solar energy absorption or at higher depth as a result of thermal activity of the Earth, and transforms them into a continuous and instantaneous heating solution inside e.g. a house by means of a heat pump.

Such technique may not be adapted however when the structure to be heated or cooled is not a house but a much larger civil engineering structure, such as a stadium, a building, or other. Particularly such structures are not in need of continuous heating or cooling, but only on certain occasions (e.g. matches or shows). This is because the debit flow of calories captured from the soil may then be in insufficient amount with respect to the volume to be regulated in temperature in short period of time.

Moreover, using elements external to the structure to get thermal energy may lead to the construction of a complex, heavy and costly network of geothermic probes, possibly up to long distance from the structure itself. Removal of such network would also represent a complex task.

So there is a need to improve the heating or cooling with respect to a structure, by alleviating at least in part some or all the above drawbacks.

The invention thus proposes a structural element for a civil engineering structure, arranged for transitorily storing and using in a deferred manner thermal energy, the structural element comprising a first part and a second part. The structural element is provided with:
- a first set of at least one heat exchanger comprising at least one tube arranged for conducting a heat transfer fluid and extending between the first part of the structural element and the second part of the structural element so as to transfer thermal energy from the first part of the structural element acting as a heat or coolness source to the second part of the structural element where it is transitorily stored.

Advantageously, the structural element is further provided with:
- a second set of at least one heat exchanger comprising at least one tube arranged for conducting a heat transfer fluid and extending at least between the second part of the structural element and at least one entity external to the structural element, the second set of at least one heat exchanger being arranged for, when activated, transferring at least part of the thermal energy transitorily stored in the second part of the structural element to said entity.

Such structural element, which is (or is intended to become) part of a civil engineering structure, is the one element that plays the role of both a heat or coolness source (first part) and a transitory thermal energy storage (second part). The invention thus takes benefit from the structure itself to generate and use heat or coolness. Building a long and complex network of geothermic probes outside the structure may thus be avoided. This also helps demounting the structure if needed, as only limited portions or even no portion at all of the heat exchangers may remain in place after removal of the structural element.

The set(s) of heat exchangers used in cooperation with the structural element allow(s) to bring the second part of the structural element to a determined temperature, in a process which may be continuous in time, and then, only when necessary, to use the thermal energy so transitorily stored in the second part of the structural element to increase or decrease the temperature inside the structure. Due to its thermal inertia, the second part of the structural element is thus used as a temporary heat or coolness buffer, while the first part of the structural element acts as a heat or coolness source for the second part of the structural element.

According to optional features that may be combined in any possible way:
- said at least one entity includes another structural element for the civil engineering structure and/or air adjacent to the structural element;
- the second set of at least one heat exchanger is arranged at least in part for conducting air throughout the structural element;
- the first set of at least one heat exchanger and the second set of at least one heat exchanger have at least part of at least one of said tube in common;
- the first set of at least one heat exchanger is arranged for transferring a heat transfer fluid from the first part of the structural element acting as a heat or coolness source into a storage space incorporated in the second part of the structural element;
- said storage space is filled at least in part with a material capable of storing thermal energy when in contact with the heat transfer fluid;
- the first and/or second set of at least one heat exchanger makes use of at least one (simple) pump;
- the first and/or second set of at least one heat exchanger makes use of at least one heat pump;
- the structural element is further provided with a third set of at least one heat exchanger arranged at least in part for conducting air throughout the first part of the structural element;
- the structural element is at least in part made of backfill;
- the backfill is stabilized using at least one reinforcement member within the structural element;
- at least one reinforcement member is connected to a facing that marks a boundary for the structural element, the facing being possibly separated from the backfill by at least one location with a thermal insulation material such as expanded polystyrene and/or mineral fibres;
- at least one heat exchanger of the first and/or the second set of at least one heat exchanger is connected to the facing.
- the structural element is arranged for being part of one of the following civil engineering structures: a building such as a stadium structure or a greenhouse;
- the structural element is arranged for supporting benches and possibly a playing field;

The invention also proposes a civil engineering structure comprising at least one structural element for transitorily storing and using in a deferred manner thermal energy as mentioned above, such as a stadium structure.

The invention also proposes a method for transitorily storing and using in a deferred manner thermal energy in a structural element as mentioned above. This method comprises:
- activating a first set of at least one heat exchanger comprising at least one tube arranged for conducting a heat transfer fluid and extending between a first part of the structural element and a second part of the structural element so as to transfer thermal energy from the first part of the structural element acting as a heat or coolness source to the second part of the structural element where it is transitorily stored.

Advantageously, the method further comprises:
- when a determined criterion is satisfied, activating a second set of at least one heat exchanger comprising at least one tube arranged for conducting a heat transfer fluid and extending at least between the second part of the structural element and at least one entity external to the structural element, the second set of at least one heat exchanger being arranged for transferring at least part of the thermal energy transitorily stored in the second part of the structural element to said entity.

According to the method of the invention at least one of the first and second sets of at least one heat exchanger may be powered with a renewable source of electrical energy, for example generated with a solar panel or a wind mill.

The invention also proposes a method for building a structural element for transitorily storing and using in a deferred manner thermal energy as mentioned above. This method comprises:
- building, in successive lifts, a structural element comprising a first part and a second part;
- alternately with the building of at least some of the successive lifts of the structural element, placing a first set of at least one heat exchanger comprising at least one tube arranged for conducting a heat transfer fluid for said first set of at least one heat exchanger to extend between the first part of the structural element and the second part of the structural element.

Advantageously, the method further comprises:
- alternately with the building of at least some of the successive lifts of the structural element, placing a second set of at least one heat exchanger comprising at least one tube arranged for conducting a heat transfer fluid for said second set of at least one heat exchanger to extend at least between the second part of the structural element and at least one entity external to the structural element.

The preferred features of the above aspects which are indicated by the dependent claims may be combined as appropriate, and may be combined with any of the above aspects of the invention, as would be apparent to a person skilled in the art.
- FIG.1 is a schematic sectional elevation view of an exemplary structural element for a civil engineering structure provided with an exemplary first set of heat exchangers;
- FIG.2 is a schematic sectional top view of heat exchangers used in the exemplary structural element of FIG.1 according to 11-11;
- FIG.3 is a schematic sectional elevation view of an exemplary structural element for a civil engineering structure provided with an exemplary second set of heat exchangers;
- FIG.4 is a schematic sectional elevation view of an exemplary structural element for a civil engineering structure provided with another exemplary second set of heat exchangers;
- FIG.5 is a schematic sectional elevation view of an exemplary structural element provided with additional elements;
- FIG.6 is a schematic sectional elevation view of an exemplary structural element which is part of a stadium;
- FIG.7 is a schematic sectional elevation view of another exemplary structural element for a civil engineering structure provided with an exemplary first set of heat exchangers;
- FIG.8 is a schematic sectional elevation view of another structural element for a civil engineering structure provided with an exemplary second set of heat exchangers;
- FIG.9 is a schematic sectional elevation view of another exemplary structural element for a civil engineering structure provided with another exemplary second set of heat exchangers;
- FIG.10 is a schematic sectional elevation view of an exemplary structural element for a civil engineering structure provided with an exemplary set of heat exchangers and a thermal reservoir according to embodiment of the invention;
- FIG. 11 is a schematic sectional elevation view of an exemplary structural element for a civil engineering structure provided with an exemplary set of heat exchangers and a thermal reservoir according to another embodiment of the invention.

An aspect of the present invention relates to a structural element for a civil engineering structure. Any structural element for any type of engineering structure may be envisaged. In the following, an element for a stadium structure will be more particularly considered, without limiting in any way the general scope of the invention. Other examples of structures to which the invention may apply include e.g. a greenhouse, a building, and/or other.

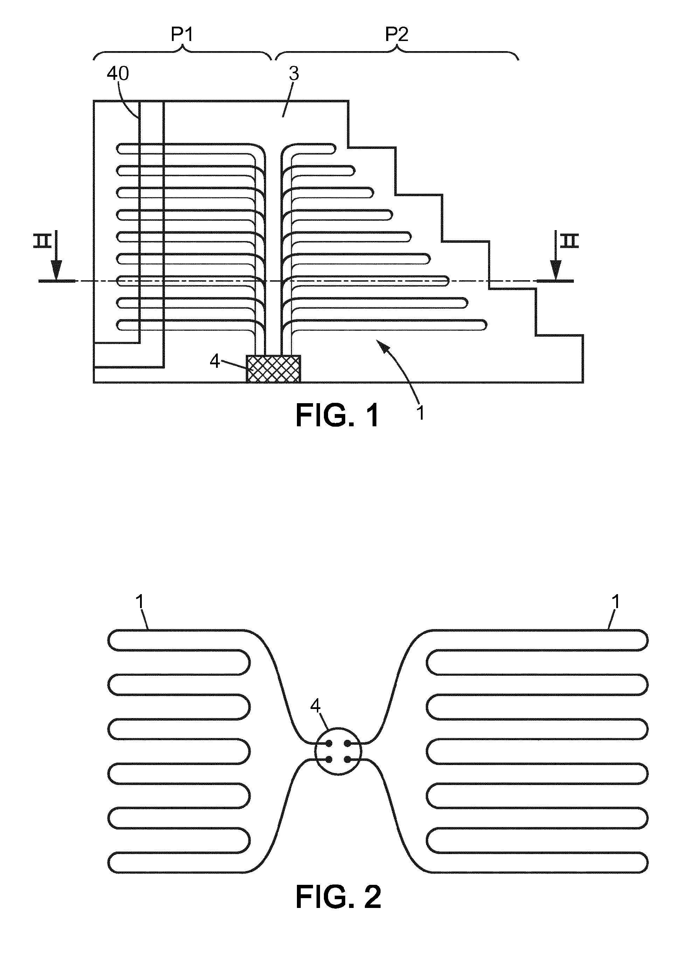

FIG.1 thus shows a structural element 3 for a stadium in the form of a backfill intended to support benches and possibly to be adjacent to a playing field.

Such structural element 3 can be made of any type of natural and/or artificial material. As an example, it may comprise soil or earth, possibly stabilized. Alternatively or in addition, it may comprise concrete, possibly recycled, steel and/or other.

The structural element 3 comprises two different parts, which can be in direct contact with each other or separated by means of an intermediate element, such as a thermal insulation material or other. The two parts of the structural element 3 may be made of the same material(s) or not. The possible thermal insulation material may also be made of the same material. As will become apparent more in detail in the following, a first part P1 of the structural element 3 acts as a heat or coolness source, while a second part P2 of the structural element 3 is arranged for transitorily storing and using in a deferred manner thermal energy, i.e. heat or coolness. The first part P1 may be located at the periphery of the structure to which the structural element 3 belongs. However any other option is also possible. The geometric distribution between the first part P1 and the second part P2 of the structural element 3 may take any suitable form.

The structural element 3 is provided with at least one set of at least one heat exchanger each. Each heat exchanger comprises at least one tube arranged for conducting a heat transfer fluid.

FIG.1 shows a first set 1 of heat exchangers. Those heat exchangers extend between the first part P1 of the structural element 3 and the second part P2 of the structural element 3. So all the heat exchangers of the first set 1 are entirely located within the structural element 3. This is a significant advantage in terms of mouting or demounting the structure.

In the example of FIG.1, the first set 1 of heat exchangers consists of tubes including any type of heat transfer fluid, such as water and/or other, and divided into two main parts. On FIG.1, the left part of the first set 1 of heat exchangers comprises tubes extending in the first part P1 of the structural element 3, while the right part of the first set 1 of heat exchangers comprises tubes extending in the second part P1 of the structural element 3. In the illustrated example, those tubes are substantially horizontal, although other configurations may be adopted alternatively or in addition. Also in the illustrated example, the tubes are substantially parallel, and the left tubes are of similar length as represented in FIG.1. But again, other configurations may be adopted alternatively or in addition.

At least some of the tubes may be closed so that the heat exchangers work in closed loop. Alternatively, at least some of the tubes may be open so that the heat exchangers work in open loop.

At least some of the heat exchangers may be arranged in superposed layers as represented in FIG.1. They may be included in substantially horizontal planes respectively. Alternatively or in addition, each layer of heat exchangers may include several branches, as shown in the top view of FIG.2.

Note that the geometry of the first set 1 of heat exchangers may take various forms and the above-described example should be in no way interpreted as limiting. For example, at least some of the heat exchangers of the first set 1 may not have a rectilinear course.

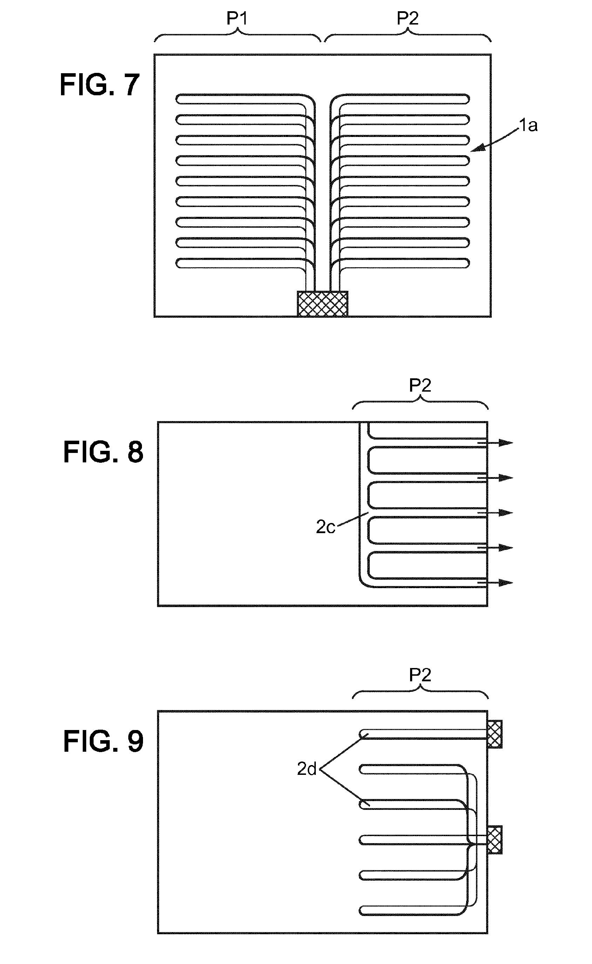

FIG.7 shows a first set 1 a of heat exchangers similar to the first set 1 of heat exchangers of FIG.1, but for a structural element which is part (or intended to be part) of a structure different from a stadium.

Thermal energy is transferred by means of the first set 1 of heat exchangers from the first part P1 of the structural element 3 acting as a heat or coolness source to the second part P2 of the structural element 3 where it is transitorily stored.

This transfer may result from natural circulation of a heat transfer fluid within the heat exchangers of the first set 1.

Advantageously, the first set 1 of heat exchangers may make use of an additional device 4 to facilitate the thermal energy transfer as shown in FIG.1. This device 4 may comprise at least one simple pump which favours circulation of a heat transfer fluid within the heat exchangers, thereby increasing the heat exchanges between the first part P1 and the second part P2 of the structural element 3, as will be easily understood by one skilled in the art.

Alternatively or in addition, the device 4 may comprise at least one heat pump. Such heat pump, which may comprise at least a condenser, an expansion valve, an evaporator and a compressor as is conventional, has the effect of offsetting the temperature in the first set 1 of heat exchangers located in both parts of the structural element 3, as will be easily understood by one skilled in the art. Compared to a simple pump, the use of a heat pump allows increasing the heat exchanges between the first part P1 and the second part P2 of the structural element 3. The second part P2 of the structural element 3 can thus be made colder or hotter depending on the sought result. Compared to the second part P2 of the structural element 3, the first part P1 of the structural element 3 has an opposite variation of its temperature.

Note that the position and the number of simple pump(s) and/or heat pump(s) may be various and different from the example shown for illustrative purpose in FIGs. 1 and 2.

In the example shown in FIG.1, which corresponds more particularly to a process of cooling of the second part P2 of the structural element 3 and a coincident heating of the first part P1 of the structural element 3 acting as a coolness source, the first set 1 of heat exchangers is used to direct coolness from the first part P1 to the second part P2 of the structural element 3 and, coincidently, to direct heat from the second part P2 to the first part P1 of the structural element 3. The thermal energy transfer would be in the opposite direction should the first part P1 of the structural element 3 act as a heat source for the second part P2 of the structural element 3, via the first set 1 of heat exchangers.

The first set 1 of heat exchangers may be activated at some point in time. This activation may be triggered by the occurrence of determined event(s). For instance, it may result from a request from an operator. Alternatively or in addition, the first set 1 of heat exchangers may be activated when electrical energy becomes available, e.g. to supply the device 4. Such electrical energy, used to power the first set 1 of heat exchangers, may come from a renewable source of electrical energy, such as a solar panel, a wind mill and/or other.

The first set 1 of heat exchangers may be maintained active on a determined period of time, which may be long, such as several days, weeks or months. It may be maintained active continuously or quasi-continuously. This may ensure that the second part P2 of the structural element 3 reaches a determined temperature and stores a determined amount of thermal energy.

The thermal energy so transitorily stored within the second part P2 of the structural element 3, and thus within the civil engineering structure in which the structural element 3 takes part, will then be transferred at least in part to at least one entity external to the structural element 3.

The entity in question may include another structural element for the civil engineering structure in which the structural element 3 takes part. For example, when talking of a stadium structure, the entity may include benches. Alternatively or in addition, the entity may include air adjacent to the structural element 3. For example, when talking of a stadium structure, the entity may include air adjacent to benches which are supported by the second part P2 of the structural element 3, or more generally air located at or around the center of the stadium. Many other types of entities may be envisaged, depending on the application, as will be apparent to one skilled in the art.

Transferring at least part of the thermal energy transitorily stored in the second part P2 of the structural element 3 to at least one entity can be made by activating an advantageous second set of at least one heat exchanger extending at least between the second part P2 of the structural element 3 and said entity.

The activation of the second set of at least one heat exchanger may result from the fact that a determined criterion is satisfied. Any possible criterion may be envisaged in this regard. As an example, the criterion may be related to the usage of the civil engineering structure in which the structural element 3 takes part. When talking of a stadium, such criterion may include the immediate or coming (e.g. in a few hours) start of a match game. Other occasions, such as shows, periodical events, and/or other may also be the basis for a determined criterion being satisfied. Dynamic parameters such as temperatures, e.g. of the air, of the first and/or second part of the structural element 3, of the entity and/or of other element(s), may be taken into account in the considered criterion.

The detection of a determined criterion being satisfied and/or the resulting activation of the second set of at least one heat exchanger may be totally automatic, totally manual or a combination of automatic and manual operations.

The second set of heat exchangers may also be activated when electrical energy becomes available, e.g. to supply the device 4 (together with or independently of the first set 1 of heat exchangers). Such electrical energy, used to power the second set of heat exchangers, may come from a renewable source of electrical energy, such as a solar panel, a wind mill and/or other.

Because the thermal energy transitorily stored in the second part P2 of the structural element 3 is transferred at least partly to the entity only upon activation of the second set of at least one heat exchanger, that is possibly long after it has started being stored in the second part P2 of the structural element 3, it may be seen as a deferred use of such thermal energy. This is contrast with prior techniques, in which only one set of heat exchangers is needed and/or the thermal energy obtained via this set is used directly and without delay.

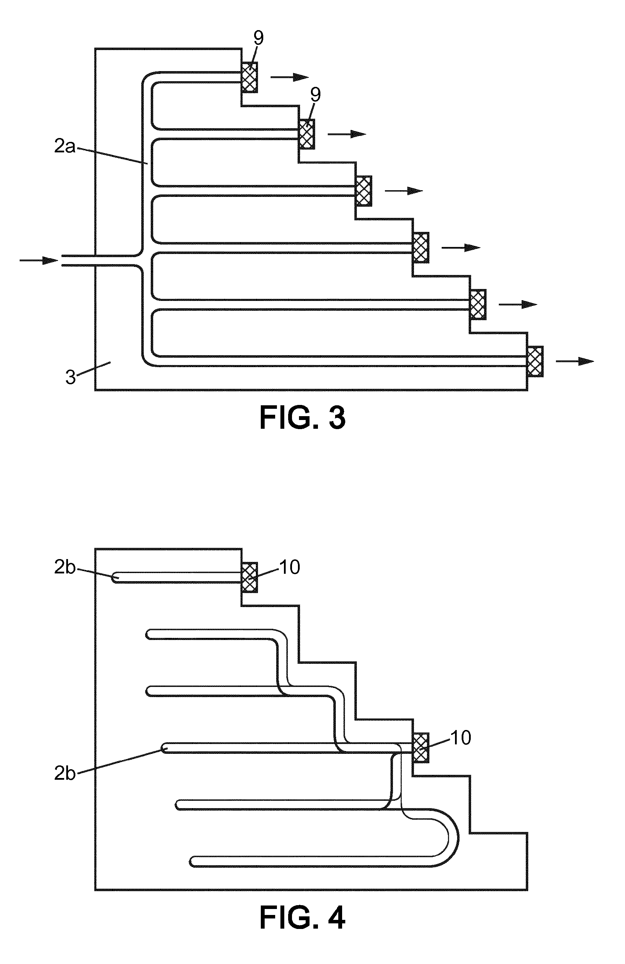

FIGs. 3 and 4 show two examples of a second set of at least one heat exchanger that may be each used to transfer at least part of the thermal energy transitorily stored in the second part P2 of the structural element 3 to a respective entity. Those two examples may be carried out alone or together. In those examples, it is assumed that coolness was transitorily stored in the second part P2 of the structural element 3 as a result of the above-described action of the first set 1 of at least one heat exchanger, and that at least part of that coolness is to be transferred through said second set(s) of at least one heat exchanger. But it will be understood that the same type of arrangement may be used to take benefit from heat transitorily stored in the second part P2 of the structural element 3.

In the example of FIG.3, the second set 2a of heat exchangers is arranged at least in part for conducting air throughout the structural element 3. To this end, it includes at least one inlet for hot ambient air (on the left end of the structural element 3 on FIG.3) and at least one outlet for refreshed air (several outlets on the right end of the structural element 3 on FIG.3).

In this case, the incoming air is conducted from outside the structural element 3 into the heat exchangers of the second set 2a and throughout the structural element 3. It is thus refreshed by contact of the heat exchangers with the second part P2 of the structural element 3 storing coolness. While the second set 2a of heat exchangers goes both through the first and second parts of the structural element 3, in this example, it may thus be advantageous for its most significant portion to be located in the second part P2 of the structural element 3. The refreshed air leaves the heat exchangers of the second set 2a and it mixes hot ambient air adjacent to the structural element 3.

In order to be conducted within the heat exchangers of the second set 2a and throughout the structural element 3, the air may be pulsed with conventional pulsing means, such as fans. Alternatively or in addition, the air may be simply sucked by a natural convective air flow organized within the civil engineering structure. In case of a stadium, the air may indeed flow from the outside to the inside of the stadium, e.g. by escaping through a hole in the roof of the stadium.

By virtue of such arrangement, spectators sitting on benches and/or players standing on a playing field of the stadium may be refreshed, as they receive refreshed air.

As shown in FIG.3, devices 9 may be placed at the exit of some or all of heat exchangers of the second set 2a so as to regulate the ventilation flow to a desired intensity. Those devices 9 may be used to activate or deactivate the second set 2a of heat exchangers.

FIG.8 shows a similar second set 2c of heat exchangers, but for a structural element which is part of a structure different from a stadium. Another difference with the second set 2a of heat exchangers is that the second set 2c of heat exchangers is arranged for conducting air throughout the second part P2 of the structural element only. In particular, the second set 2c of heat exchangers does not pass through the first part P1 of the structural element (although this would be another suitable option). To this end, the inlet for ambient air is located directly on the second part P2 of the structural element.

In the example of FIG.4, the second set 2b of heat exchangers extends at least between the second part P2 of the structural element 3 and benches supported by the structural element 3. Alternatively or in addition, it may also extend at least between the second part P2 of the structural element 3 and an adjacent playing field.

The second set 2b of heat exchangers may include tubes filled with a heat transfer fluid, e.g. in closed loop. Like for the first set 1 of heat exchangers mentioned above, one or several simple pumps or heat pumps 10 may be used to favour the heat exchanges between the structural element 3 and the benches (or any other suitable entity). Those pumps 10 may be used to activate or deactivate the second set 2b of heat exchangers.

With this arrangement, spectators sitting on the benches supported by the structural element 3 and/or players standing on a playing field adjacent to the structural element 3 may be refreshed by contact or proximity with the refreshed benches and/or playing field.

FIG.9 shows a similar second set 2d of heat exchangers, but for a structural element which is part of a structure different from a stadium. Another difference with the second set 2b of heat exchangers is that the second set 2d of heat exchangers extends only between the second part P2 of the structural element and an adjacent part thereof. In particular, the second set 2d of heat exchangers does not pass through the first part P1 of the structural element (although this would be another suitable option).

In FIGs.3, 4, 8 and 9, the optional second sets of heat exchangers have been represented in superposed and substantially horizontal layers. However, as mentioned above with respect to the first set 1 of heat exchangers, any other appropriate geometry may apply for the second set(s) of heat exchanger(s), as will be apparent to one skilled in the art. As an example, at least some heat exchangers of the second set(s) may be independent. As another example, a non-rectilinear course, e.g. a wavy course, may be envisaged for at least some of the heat exchangers of the second set(s).

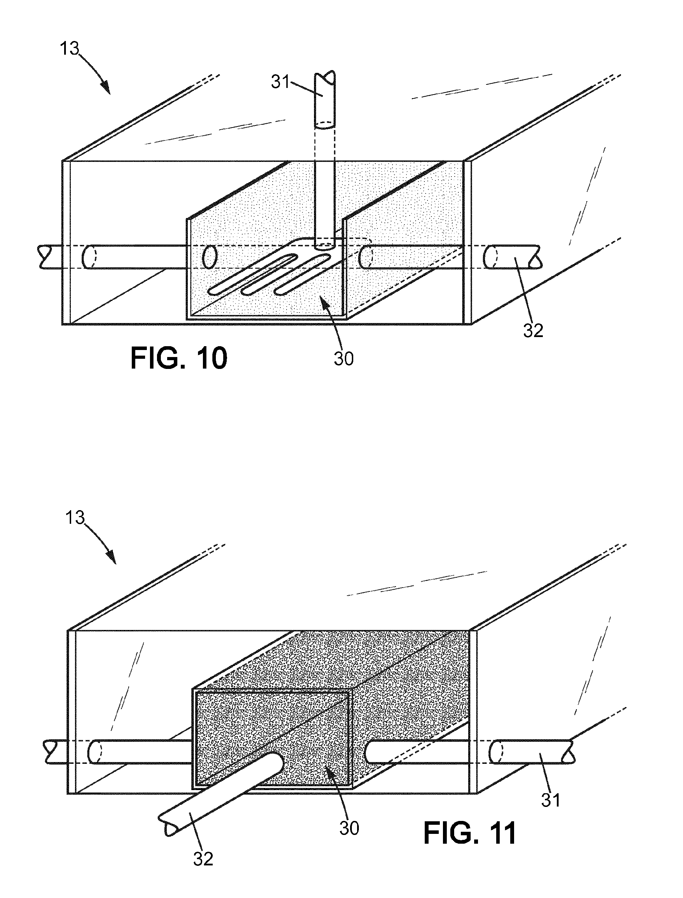

FIGs. 10 and 11 show a portion of a structural element 13 according to embodiments of the invention. According to theses embodiments, the structural element 13 comprises a thermal reservoir 30, a first set of heat exchanger comprising tubes 31 arranged for conducting a first heat transfer fluid and a second set of heat exchanger comprising tubes 32 arranged for conducting a second heat transfer fluid.

In the embodiment represented on FIG. 10, the first and second heat exchangers comprise tubes that are arranged so as to circulate trough in the thermal reservoir 30. The thermal reservoir 30 is arranged in the second part of the structure 13 where thermal energy is transitorily stored.

According to such embodiments of the invention, the heat exchanger may be arranged in layers, for example they may be included in substantially horizontal or vertical planes respectively. Alternatively or in addition, each heat exchanger may include several branches.

The geometry of the heat exchangers may take various forms and the above-described examples should be in no way interpreted as limiting. For example, the heat exchangers may not be vertical and/or parallel. They may not be horizontal and/or parallel. Also, they may not have two different portions. At least some of the heat exchangers of the first and second sets may not have a rectilinear course.

The thermal reservoir 30 is arranged so as to be able to take the lateral and vertical pressure applied by the structure and store and release thermal energy. For example the thermal reservoir 30 may be delimited by a liner filed with soil, earth, sand or rocks.

The tubes of the first and second heat exchanger are closed so that the heat exchangers work in closed loop.

For example, the first heat exchanger may have a hot fluid circulate trough the tubes of the first heat exchanger in the thermal reservoir so as to heat up the material comprised in the thermal reservoir. According to this embodiment, the heat transfer fluid remains in the tubes and does not come in contact with the material comprised in the thermal reservoir.

When required one may have a second heat transfer fluid circulate in the tubes of the second heat exchanger in the thermal reservoir. The second heat transfer fluid is heated by the porous material trough the tubes.

According to such embodiment, no fluid exchange takes place between the first and second heat exchanger and the thermal reservoir. Such heat transfer may also apply with a cold source.

Advantageously, the structure element 13 according to the embodiment of FIG. 10 presents a high thermal inertia, allowing to release slowly the thermal energy stored in the thermal reservoir.

According to the embodiment represented on FIG 11., the thermal reservoir 30 is filed with a porous material arranged so as to be able to take the lateral and vertical pressure applied by the structure. For example the thermal reservoir 30 may be filed with soil or earth or stones or gravel or rocks.

A good porous material should be strong, hard-wearing, stable, drainable, resistant to deformation, easily available, and reasonably cheap to purchase.

For example the porous material is made of crushed natural rock with particles between 28 mm and 50 mm in diameter. A high proportion of particles finer than this would reduce its drainage properties, and a high proportion of larger particles would result in the load being distributed improperly. Angular stones are preferable to naturally rounded ones, as angular stones interlock with each other.

Granite is one of the best materials in this regard. It is also possible to use the slag produced by blast furnaces. In generally material used for track ballast is suitable as porous material.

The tubes of the first and second heat exchangers are open so as to have the heat transfer fluid circulate trough the thermal reservoir trough the porous material.

For example, the first heat exchanger may have a hot fluid circulate trough the thermal reservoir so as to heat up the porous material comprised in the thermal reservoir.

When required one may have a second heat transfer fluid circulate trough the thermal reservoir using the second heat exchanger. The second heat transfer fluid being heated by the porous material.

Such heat transfer may also apply with a cold source.

Advantageously, the structure element 13 according to the embodiment of FIG. 11 presents a high thermal exchange rate between the porous material and the heat exchange fluids circulating trough the porous material comprised in the reservoir.

Advantageously, the first set of at least one heat exchanger and the second set of at least one heat exchanger may have at least part of at least one of said tubes in common. For example, the same tubes may be used for the right portion of the heat exchangers of the first set 1 of FIG.1 and for the heat exchangers of the second set 2b of FIG.4. An appropriate switching device or system, e.g. a valve system, may be provided to control whether, at a given point in time, those tubes should be used to transfer thermal energy from the first part P1 to the second part P2 of the structural element 3 (i.e. as part of the first set of heat exchangers) or to transfer at least part of the thermal energy transitorily stored in the second part P2 of the structural element to at least one external entity (i.e. as part of the second set of heat exchangers).

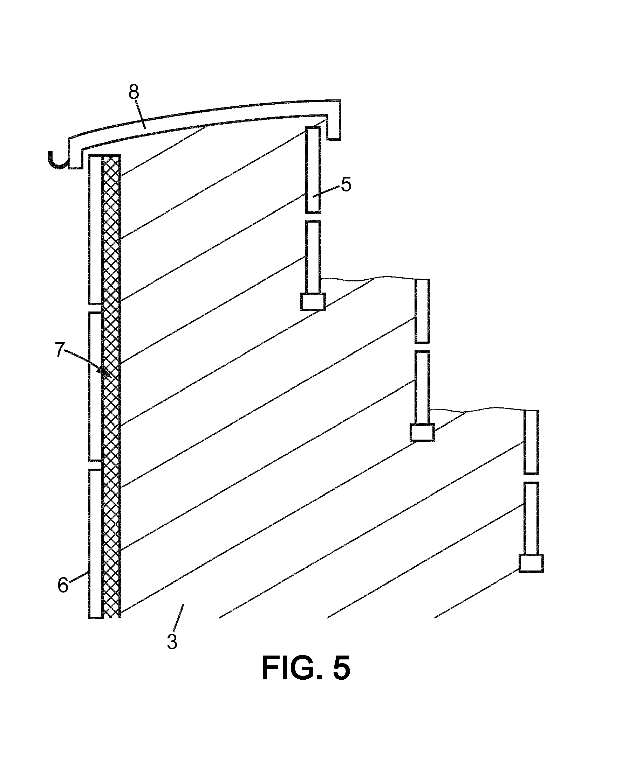

FIG.5 shows an exemplary arrangement for a structural element 3 which may be provided with first and second sets of least one heat exchanger as mentioned above.

This structural element 3 of FIG.5 is at least in part made of a backfill, which is advantageously stabilized by means of at least one (unrepresented) reinforcement member within the structural element 3. It may for example consist in conventional stabilized and possibly compacted soil or earth. A conventional technique of the Reinforced Earth^{®} company, or similar techniques, may be used in this regard.

As shown in FIG.5, a facing 6 may mark a boundary for the backfill. Moreover, one or several reinforcement members extending within the backfill may be connected to this facing. Alternatively or in addition, one or several reinforcement members may be disconnected from this facing. The reinforcement members may take various forms and use various materials, such as metal (for example galvanized steel), synthetic (for example based on polyester fibers), a combination thereof, etc. They may be placed in the backfill with a density that is dependent on the stresses that might be exerted on the structure, as will be apparent to one skilled in the art.

The facing 6 may be made of prefabricated concrete elements, e.g. in the form of slabs or blocks, juxtaposed to cover the front face of the structure. It may be built in situ by pouring concrete or a special cement.

Advantageously, the facing 6 may be separated from the backfill by at least one location (and possibly on its entire internal surface) with a thermal insulation material 7 such as expanded polystyrene, mineral fibres and/or other. By doing so, it may be avoided that too much of the thermal energy transitorily present in the first part P1 of the structural element 3, acting as a heat or coolness source, escapes through the facing 6. When heat exchangers must go out of the structural element, corresponding limited holes may be arranged in the facing 6 and the insulation material 7 for this purpose.

In an advantageous arrangement, at least part of the first and/or second set of at least one heat exchanger may simultaneously play the role of reinforcement member(s) for the stabilized structural element 3. In this case, at least one heat exchanger of the first and/or second set of at least one heat exchanger may be connected to the facing 6. In particular, horizontal parts of heat exchangers of the first set 1 and/or the second set 2a-2b as described above may be additionally used as reinforcement members for the stabilized structural element 3. It is thus avoided to provide heat exchangers and reinforcement members independently, which reduces both the time required to build the structure and its cost.

When the structural element 3 is part of stadium, as assumed above, benches 5 may mark another boundary thereof, opposite to the facing 6. Such benches 5 may have the same composition as the structural element 3, for example stabilized soil or earth. Alternatively or in addition, the benches 5 may use different materials, such as wood, cement, concrete and/or other.

Various elements may be placed at least partly on or in the structural element 3. For example, access stairs, tiers and/or railings may be placed on the backfill. Cubicles, technical premises, access tunnels and/or shops may be placed inside the backfill. Those elements could be cooled or heated as desired, by means of the above-described first and/or second set of at least one heat exchanger.

As shown in FIG.5, a cover 8 may be laid or bridged over the backfill. This cover might act as a roofing to prevent ingress of rain water or might be airproof.

Many other arrangements for a structural element may be envisaged within the framework of the present invention, as will be apparent to one skilled in the art.

Back to FIG.1, the structural element 3 may optionally be provided with a third set of at least one heat exchanger 40 arranged at least in part for conducting air throughout the first part P1 of the structural element 3. The role of this third set of at least one heat exchanger 40 is to refresh the first part P1 of the structural element 3 if the latter acts as a coolness source or to heat up the first part P1 of the structural element 3 if the latter acts as a heat source. This may be useful, especially after at least part of the thermal energy present in the first part P1 of the structural element 3 has been transferred to the second part P2 of the structural element 3 through the first set of at least one heat exchanger. Indeed, the system otherwise loses in efficiency because the temperature varies within the first part P1 cycle after cycle.

The third set of at least one heat exchanger 40 may include at least one inlet for ambient air (on the left end of the structural element 3 on FIG.1) and at least one outlet for refreshed or heated air (one outlet on top of the first part P1 of the structural element 3 on FIG.1).

In order to be conducted within the heat exchanger(s) of the third set 40 and throughout the first part P1 of the structural element 3, the air may be pulsed with conventional pulsing means, such as fans. Alternatively or in addition, the air may be simply sucked by a natural convective air flow. By choosing in an appropriate manner the time when the third set of at least one heat exchanger 40 is activated, the sought temperature variation within the first part P1 of the structural element 3 can be reached. For example, if the first part P1 of the structural element 3 is used as a coolness source in summer, the third set of at least one heat exchanger 40 may be activated during the nights so that the first part P1 of the structural element 3 can be refreshed, but deactivated during the days to avoid further heating due to hot ambient air.

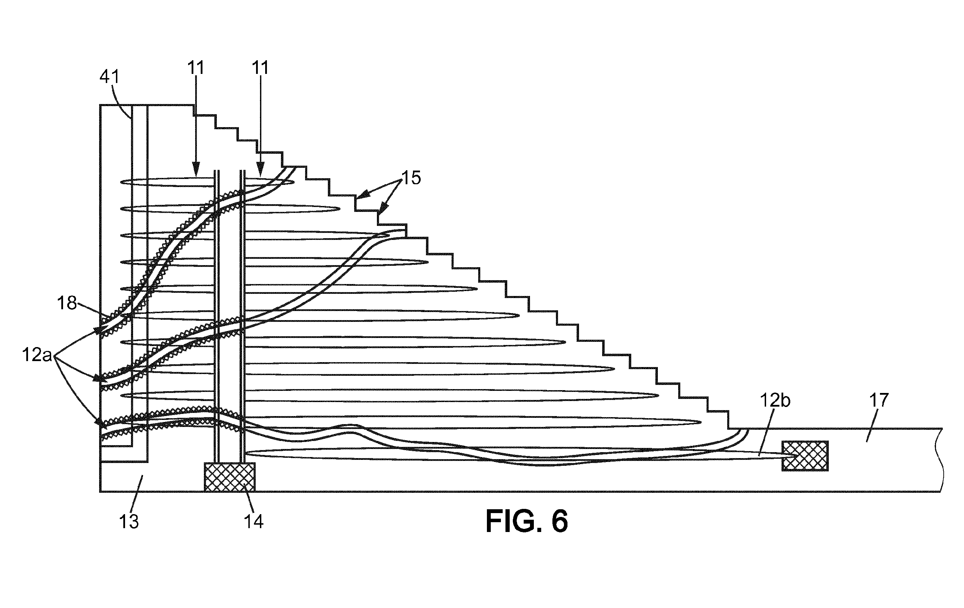

FIG.6 shows a portion of a stadium structure including an exemplary structural element 13 which may be identical or similar to the structural element 3 described above. This structural element 13 is provided with:
- a set 11 of heat exchangers possibly associated with simple and/or heat pump(s) 14, which may identical or similar to the first set 1 of at least one heat exchanger described above;
- a set 12a of heat exchangers, which may identical or similar to the second set 2a of at least one heat exchanger described above (here wavy and separate heat exchangers going throughout the structural element 3 are represented);
- at least one of the heat exchangers of the set 11 may be further used in a way identical or similar to the second set 2b of at least one heat exchanger described above;
- a set of at least one heat exchanger 41, which may identical or similar to the third set of at least one heat exchanger 40 described above.

Other elements may be associated with the structural element 13. For example, benches 15 are supported by the structural element 13. A playing field 17 is located next to the structural element 13. Reinforcements may be placed within the structural element 13, etc.

As shown in FIG.6, at least some of the heat exchangers of the second set 12a, if any, may be provided with a thermal insulation material 18 in their portion located in the first part of the structural element 13 (left part in FIG.6), while their portion located in the second part of the structural element 13, if any, may be devoid of such thermal insulation material (right part in FIG.6). In this way, the heat exchange performed by the second set 12a is really focused in the second part of the structural element 13 where thermal energy has been transitorily stored. The thermal insulation material 18 can be incorporated directly in the appropriate portion of heat exchangers of the second set 12a, or placed thereon. It may consist of or comprise polystyrene and/or mineral fibres and/or any other suitable thermal insulation material.

One skilled in the art will appreciate that other arrangements may be envisaged. Those arrangements may be adapted depending on the nature and usage of the civil engineering structure considered.

Building the structural element 3 or 13 comprising a first part and a second part as described above may be performed in successive lifts.

Alternately with the building of at least some of the successive lifts (or layers) of the structural element 3 or 13, a first set of at least one heat exchanger is placed so as to extend between the first part of the structural element and the second part of the structural element.

Also alternately with the building of at least some of the successive lifts of the structural element, a second set of at least one heat exchanger may be placed so as to extend at least between the second part of the structural element and at least one entity external to the structural element.

For example, a first lift of structural element may be placed on the ground and then at least one first heat exchanger of the first set and/or of the second set may be put on this first lift. This step may be repeated until all the heat exchangers of the first set and/or second set are put in place. Finally, the top part of the first set and/or second set of at least one heat exchanger is covered by the last lift of structural element.

Other buildings methods may be carried out alternatively or in addition, as will be apparent to one skilled in the art.

Note that demounting or removing such structural element 3 or 13 is not too complex a task. For example, when the structural element is mainly made of earth, the latter may be taken away little by little. The heat exchangers of the first set and, optionally, of the second set (and/or other elements), cleared by this operation, may be removed in turn. Most or all of those elements may be reused later on to build a new structure at the same location or elsewhere.

## Claims

1. A structural element (3;13) for a civil engineering structure, arranged for transitorily storing and using in a deferred manner thermal energy, the structural element comprising a first part (P1) and a second part (P2) and being provided with:
- a first set (1;11) of at least one heat exchanger comprising at least one tube arranged for conducting a heat transfer fluid and extending between the first part of the structural element and the second part of the structural element so as to transfer thermal energy from the first part of the structural element acting as a heat or coolness source to the second part of the structural element where it is transitorily stored.

2. The structural element (3;13) as claimed in claim 1, further provided with:
- a second set (2a;2b;12a) of at least one heat exchanger comprising at least one tube arranged for conducting a heat transfer fluid and extending at least between the second part of the structural element and at least one entity (5;15;17) external to the structural element, the second set of at least one heat exchanger being arranged for, when activated, transferring at least part of the thermal energy transitorily stored in the second part of the structural element to said entity.

3. The structural element (3;13) as claimed in claim 2, wherein said at least one entity (5;15;17) includes another structural element for the civil engineering structure and/or air adjacent to the structural element.

4. The structural element (3;13) as claimed in claim 2 or 3, wherein the second set (2a;12a) of at least one heat exchanger is arranged at least in part for conducting air throughout the structural element.

5. The structural element (3;13) as claimed in any one of claims 2 to 4, wherein the first set (1;11) of at least one heat exchanger and the second set (2a;12a) of at least one heat exchanger have at least part of at least one of said tubes in common.

6. The structural element (3;13) as claimed in any one of the foregoing claims, wherein the first set (1;11) of at least one heat exchanger is arranged for transferring a heat transfer fluid from the first part of the structural element acting as a heat or coolness source into a thermal reservoir (30) incorporated in the second part of the structural element (3;13).

7. The structural element (3;13) as claimed in claim 6, wherein said thermal reservoir (30) is filled at least in part with a material capable of storing thermal energy when in contact with the heat transfer fluid.

8. The structural element (3;13) as claimed in any one of claims 2 to 7, wherein the first set (1;11) and/or second set (2a;12a) of at least one heat exchanger makes use of at least one pump (4;10;14).

9. The structural element (3;13) as claimed in any one of claims 2 to 8, wherein the first and/or second set of at least one heat exchanger makes use of at least one heat pump (4;10;14).

10. The structural element (3;13) as claimed in any one of the foregoing claims, further provided with a third set (40) of at least one heat exchanger arranged at least in part for conducting air throughout the first part (P1) of the structural element.

11. The structural element (3;13) as claimed in any one of the foregoing claims, wherein the structural element is at least in part made of backfill.

12. The structural element (3; 13) as claimed in claim 11, wherein the backfill is stabilized using at least one reinforcement member within the structural element.

13. The structural element (3;13) as claimed in any one of the foregoing claims, wherein the structural element is arranged for being part of one of the following civil engineering structures: a building such as a stadium structure or a greenhouse.

14. The structural element (3;13) as claimed in claim 13, wherein the structural element is arranged for supporting benches (5;15) and possibly a playing field (17).

15. A civil engineering structure comprising at least one structural element (3;13) for transitorily storing and using in a deferred manner thermal energy according to any one of the foregoing claims, such as a stadium structure.

16. A method for transitorily storing and using in a deferred manner thermal energy in a structural element (3;13) according to any one of claims 1 to 14, the method comprising:
- activating a first set (1;11) of at least one heat exchanger comprising at least one tube arranged for conducting a heat transfer fluid and extending between a first part of the structural element and a second part (P2) of the structural element so as to transfer thermal energy from the first part (P1) of the structural element acting as a heat or coolness source to the second part of the structural element where it is transitorily stored.

17. The method as claimed in claim 16, further comprising:
- when a determined criterion is satisfied, activating a second set (2a;2b;12a) of at least one heat exchanger comprising at least one tube arranged for conducting a heat transfer fluid and extending at least between the second part of the structural element and at least one entity (5;15;17) external to the structural element, the second set of at least one heat exchanger being arranged for transferring at least part of the thermal energy transitorily stored in the second part of the structural element to said entity.

18. The method as claimed in claim 16 or 17, wherein at least one of the first and second sets of at least one heat exchanger is powered with a renewable source of electrical energy, for example generated with a solar panel or a wind mill.

19. A method for building a structural element (3;13) for transitorily storing and using in a deferred manner thermal energy according to any one of claims 1 to 14, the method comprising:
- building, in successive lifts, a structural element comprising a first part (P1) and a second part (P2);
- alternately with the building of at least some of the successive lifts of the structural element, placing a first set (1;11) of at least one heat exchanger comprising at least one tube arranged for conducting a heat transfer fluid for said first set of at least one heat exchanger to extend between the first part of the structural element and the second part of the structural element.

20. The method as claimed in claim 19, further comprising:
- alternately with the building of at least some of the successive lifts of the structural element, placing a second set (2a;2b;12a) of at least one heat exchanger comprising at least one tube arranged for conducting a heat transfer fluid for second set of at least one heat exchanger to extend at least between the second part of the structural element and at least one entity (5;15;17) external to the structural element.
